# NEUE EUROPÄISCHE PATENTSCHRIFT

(11) **EP 0 877 877 B2**
(45) Veröffentlichungstag und Bekanntmachung des Hinweises auf die Entscheidung über den Einspruch: **20.03.2002**
(45) Hinweis auf die Patenterteilung: 28.07.1999
(21) Anmeldenummer: 97902335.5
(22) Anmeldetag: 06.02.1997
(51) Int. Cl.: F16H 61/00, F16H 59/02

(54) **STEUERUNGSANORDNUNG FÜR EIN AUTOMATISCHES ELEKTROHYDRAULISCH GESTEUERTES GETRIEBE**
CONTROL ARRANGEMENT FOR AN AUTOMATIC ELECTROHYDRAULICALLY CONTROLLED TRANSMISSION
SYSTEME DE COMMANDE POUR TRANSMISSION AUTOMATIQUE A COMMANDE ELECTRO-HYDRAULIQUE

(30) Priorität: 10.02.1996 DE 19604948
(43) Veröffentlichungstag der Anmeldung: 18.11.1998
(73) Patentinhaber: AUDI AG, 85045 Ingolstadt (DE); Conti Temic microelectronic GmbH, 90411 Nürnberg (DE)
(72) Erfinder: BARNREITER, Karl, D-85122 Hitzhofen (DE); FLEISCHMANN, Hans-Peter, D-85134 Stammham (DE); MÄRKL, Johann, D-85128 Nassenfels (DE); RUDOLPH, Hans-Jürgen, D-86333 Neuburg (DE); GENZEL, Michael, D-90574 Ro tal (DE); POHLMANN, Roger, D-90403 Nürnberg (DE); GOTTSCHALLER, Armin, D-92318 Neumarkt (DE); SCHMID, Thomas, D-90459 Nürnberg (DE); FLIERL, Werner, D-92237 Sulzbach-Rosenberg (DE)
(74) Vertreter: Geissler, Manfred
(86) Internationale Anmeldenummer: EP9700521
(87) Internationale Veröffentlichungsnummer: WO9729305

(56) Entgegenhaltungen:
- DE-A- 4 208 888
- DE-A- 4 344 584
- DE-C- 4 334 595
- GB-A- 2 285 103
- US-A- 5 101 677
- VDI-Berichte 1175, 1995, Seiten 361 bis 377 VDI-Berichte 1175, 1995, Seiten 361 bis 377
- VDI- Berichte 1175, 1995, Seiten 339 bis VDI- Berichte 1175, 1995, Seiten 339 bis 349 349
- Vortragsliste zur VDI-Tagung am 26. und Vortragsliste zur VDI-Tagung am 26. und 27.4.1995 in Friedrichshafen 27.4.1995 in Friedrichshafen
- VDI-Berichte 1170,1994, Seiten 201 bis 218 VDI-Berichte 1170,1994, Seiten 201 bis 218

## Beschreibung

Die Erfindung betrifft eine Steuerungsanordnung an einem automatischen, elektrohydraulisch gesteuerten Getriebe, insbesondere für Kraftfahrzeuge, gemäß dem Oberbegriff des Patentanspruches 1.

Ein derartiges Getriebe für Kraftfahrzeuge zeigt die GB-A 2 285 103, bei dem die hydraulische Steuerungseinrichtung und die elektronische Steuerungseinrichtung unmittelbar aneinander angebaut sind und Steckverbindungen zwischen den Magnetventilen der hydraulischen Steuerungseinrichtung und der elektronischen Steuerung vorgesehen sind. Ferner ist bereits ein Zentralstecker vorgesehen, mittels dem die Getriebesteuerung mit dem übrigen Aggregeatemanagement bzw. dem Bordnetz des Kraftfahrzeuges verbindbar ist. Eine derartige Steuerungsanordnung ist kompakt, fertigungstechnisch günstig vormontierbar und prüfbar und schließt Fehlerquellen, insbesondere bei der Montage, weitgehendst aus.

Aufgabe der Erfindung ist es, die gattungsgemäße Steuerungsanordnung hinsichtlich des Montageaufwandes und der Störunempfindlichkeit noch weiter zu verbessern.

Diese Aufgabe wird erfindungsgemäß durch die kennzeichnenden Merkmale des Patentanspruches 1 gelöst. Vorteilhafte Weiterbildungen der Erfindung sind den weiteren Patentansprüchen entnehmbar.

Erfindungsgemäß wird vorgeschlagen, an der elektronischen Steuerung einen weiteren Sensorvorzusehen, der unmittelbar mit einem Stellungsgeber einer manuell betätigbaren, im Getriebe drehbar gelagerten Schaltwelle zusammenwirkt. Damit können in montagegünstiger Weise auch die Schaltbefehle unmittelbar und berührungslos in die elektronische Steuerung eingegeben und logisch verarbeitet werden. Dabei ist das freie Ende des Sensors in einer getriebeseitigen Aufnahme positioniert, so daß eine präzise und Toleranz unempfindliche Sensierung der Schaltbefehle sichergestellt ist. Durch weitere getriebeseitige Aufnahmen sind auch Drehzahlsensoren zum berührungslosen Sensieren der An- und Abtriebswellendrehzahlen exakt positioniert.

Der Stellungsgeber kann fertigungstechnisch günstig aus Kunststoff hergestellt sein, wobei je Schaltstellung ein Magnetelement zur berührungslosen Schaltstellensensierung nach dem Halleffekt-System eingebunden sein kann.

Eine einfache Drucksensierung an der hydraulischen Steuerungseinrichtung ist durch zumindest einen offenliegenden Steuerkanal gebildet, der von jeweils einem Drucksensor der elektronischen Steuerungseinrichtung unmittelbar abgedeckt ist.

Schließlich ist an der elektronischen Steuerungseinrichtung ebenfalls ein einziger Zentralanschluß für den Anschluß des Getriebes an das übrige Aggregatemanagement und das Bordnetz des Kraftfahrzeuges vorgesehen, wobei die hydraulische und elektronische Steuerungseinrichtung von einem Getriebe-Abschlußdeckel umfaßt sind und ein Durchbruch im Abschlußdeckel den Zentralanschluß dicht abschließt.

Ein Ausführungsbeispiel der Erfindung ist im folgenden mit weiteren Einzelheiten näher beschrieben. Die schematische Zeichnung zeigt in
- Fig. 1: einen teilweisen Längsschnitt entlang der Getriebe-Abtriebswelle mit Abschlußdeckel und hydraulischer und elektronischer Steuerung eines automatischen CVT-Getriebes eines Kraftfahrzeuges;
- Fig. 2: einen weiteren teilweisen Längsschnitt ähnlich Fig. 1, jedoch entlang mehrerer hydraulischer Leitungsverbindungen zwischen der hydraulischen Steuerung und im Getriebe befindlichen, hydraulisch gesteuerten Kupplungen des Getriebes;
- Fig. 3: in raumbildlicher Darstellung eine abschlußdeckelseitige Ansicht des stimseitigen Getriebeflansches mit aufgestecker hydraulischer und elektronischer Steuerung und Getriebe-Abschlußdeckel, sowie mit Anordnung der Getriebe-Schaltwelle; und
- Fig. 4: eine weitere raumbildliche Darstellung von Schaltwelle und elektronischer Steuerung in zur Fig. 3 entgegengesetzer, getriebeseitiger Ansicht.

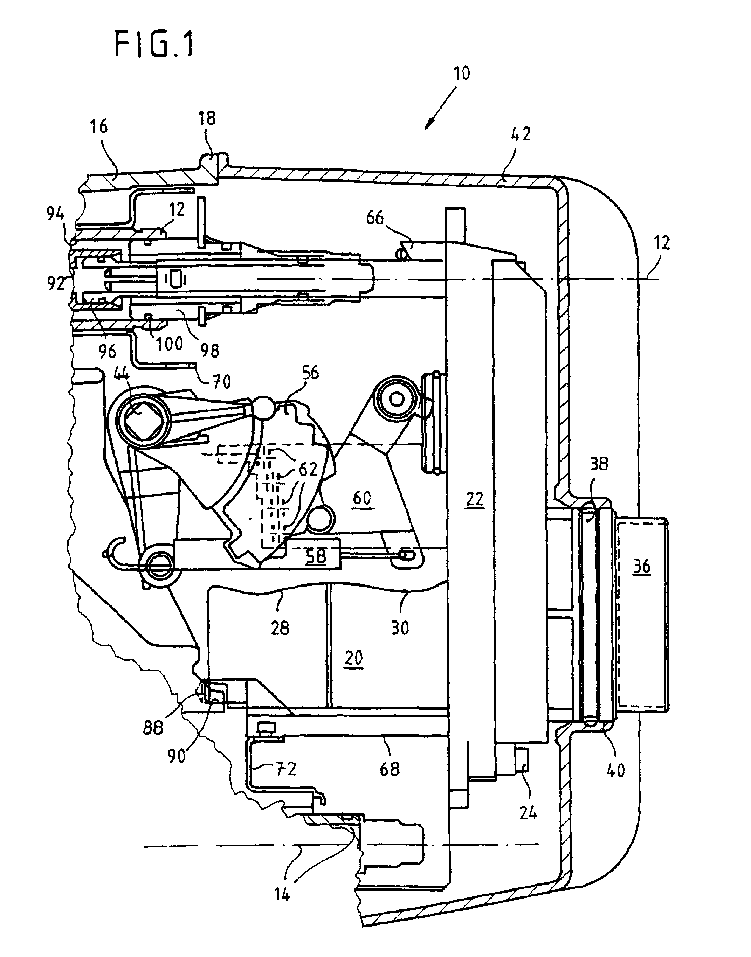

Der in den Fig. 1 - 4 dargestellte Abschnitt 10 ist Teil eines elektrohydraulisch gesteuerten CVT-Getriebes mit einer Antriebswelle 12 und einer Abtriebswelle 14, auf denen in ihren wirksamen Durchmessern verstellbare An- und Abtriebs-Kegelscheiben und ein Umschlingungsmittel, z. B. ein Gliederband, zur stufenlosen Übersetzungsänderung angeordnet sind und das Getriebemittel zur Drehrichtungsumkehr (Rückwärtsgang) und hydraulisch beaufschlagbare Kupplungen zum Anfahren und zur Fahrrichtungsumschaltung enthält. Diese nicht dargestellten Getriebkomponenten sind herkömmlicher, bekannter Bauart.

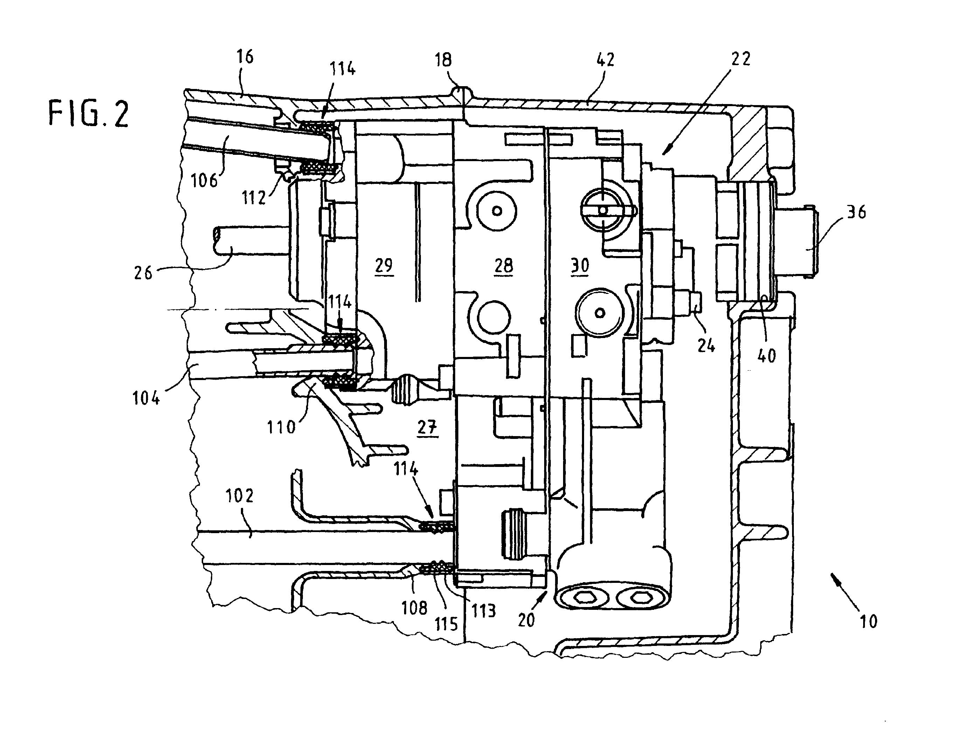

Das Gehäuse 16 des Getriebes endet an dem dem Getriebeein- und -ausgang gegenüberliegendem Ende in einem stirnseitigen Getriebeflansch 18, auf den einander unmittelbar benachbart (vgl. Fig. 2) eine Hydraulikpumpe 29, eine hydraulische Steuerung 20 und eine elektronische Steuerung 22 aufgesteckt und mittels Schrauben 24 und nicht dargestellten Paßstiften lagegenau befestigt sind. Die Hydraulikpumpe 29 liegt dabei in einem vertieften Bereich 27 des Getriebeflansches 18, ist unmittelbar an die hydraulische Steuerung 20 angeschraubt und über die teilweise dargestellte Welle 26 getriebeseitig angetrieben.

Die hydraulische Steuerung 20 besteht im wesentlichen aus zwei Kanalplatten 28,30, in denen in bekannter Weise Steuerkanäle, Kolbenschieber und Magnetventile (nicht dargestellt) zum Ansteuern der Kegelscheiben und Kupplungen des Getriebes angeordnet sind und in die unmittelbar das unter Druck stehende Hydraulikfluid aus der Pumpe 29 eingespeist wird.

Die elektronische Steuerung 22, die unmittelbar auf die hydraulische Steuerung 20 aufgesteckt ist, enthält in bekannter Weise eine CPU mit den logischen Verknüpfungsschaltungen sowie Kennlinienspeicher der Schaltprogramme und entsprechende Ausgangsverstärker zur Ansteuerung der Magnetventile zur hydraulischen Steuerung des Getriebes, wobei die fahrzeugspezifischen Parameter wie Motormanagement, Leistungsanforderung (Gaspedalstellung), etc. vom Kraftfahrzeug über einen an der plattenförmigen elektronischen Steuerung 22 vorgesehenen Zentralanschluß 36 in Form einer Steckerbuchse mit entsprechenden Steckkontakten eingeleitet und Getriebesignale abgegeben werden (z. B. Geschwindigkeitssignal, Überwachungssignale, Diagnose, etc.).

Der Zentralanschluß 36 erstreckt sich dabei unter Zwischenschaltung einer Ringdichtung 38 durch einen Durchbruch 40 in einem die hydraulische und elektronische Steuerung 20,22 umschließenden Abschlußdeckel 42. Der Abschlußdeckel 42 ist wiederum mit dem Getriebeflansch 18 unter Zwischerschaltung einer Dichtung verschraubt.

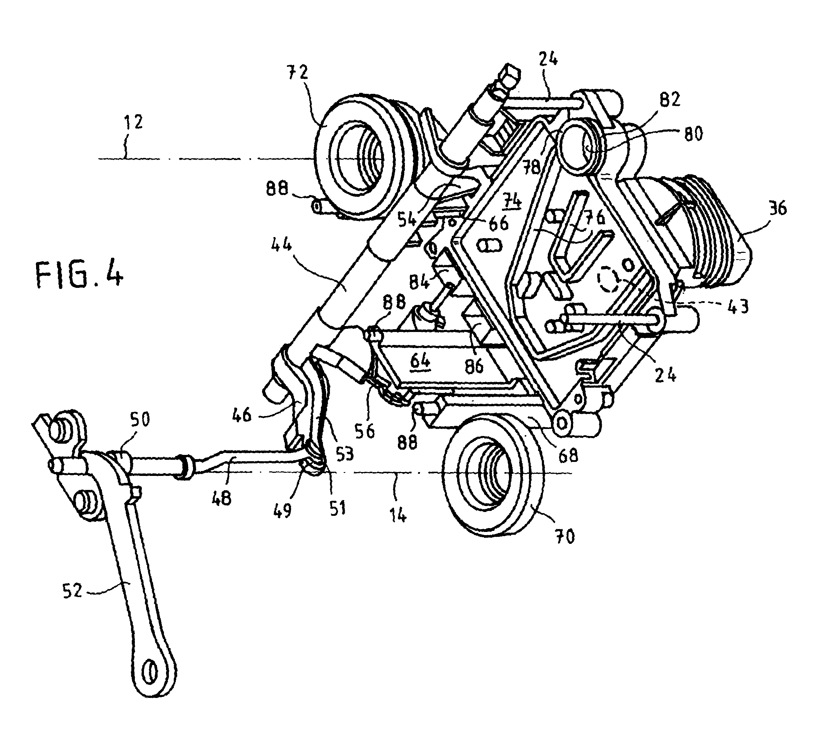

In der elektronischen Steuerung 22 ist ferner ein Chip 43 als Temperatursensor (vgl. Fig. 4) vorgesehen, über den die Temperatur des Hydraulikfluids überwacht wird. Dadurch sind schnelle temperaturabhängige Eingriffe in die Getriebesteuerung möglich, um z. B. bei tiefen Temperaturen Warmfahrprogramme (Einsteuerung kürzerer Getriebeübersetzungen = höhere Motordrehzahl) oder bei zu hohen Temperaturen kürzere Kupplungseingriffszeiten oder die Getriebebeanspruchung vermindernde Fahrprogramme oder Motoreingriffe auszulösen.

In dem Getriebegehäuse 16 ist ferner eine über einen Gangwählhebel (nicht dargestellt) manuell betätigbare Schaltwelle 44 drehbar gelagert (vgl. z. B. Fig. 4), die über einen abragenden Arm 46 und ein Gestänge 48 mit einer Konusbüchse 50 die Klinke 52 einer Parksperre (nicht dargestellt) des Getriebes betätigt. Ein federnder Sicherungsarm 53 der Schaltwelle 44 hält dabei das um 90 ° abgebogene Ende 51 des Gestänges 48 in der korrespondierenden Lagerbohrung 49 des Armes 46. Bei der Montage des Gestänges 48 ist der federnde Arm 53 entsprechend anzuheben, bis das abgebogene Ende 51 in die Lagerbohrung 49 eingeschoben werden kann.

Ein weiterer abragender Arm 54 der Schaltwelle 44 betätigt einen Schaltschieber (nicht dargestellt) der hydraulischen Steuerung 20.

Schließlich trägt die Schaltwelle 44 einen mit Kunststoff umspritzten Stellungsgeber 56, der mit einer durch eine Feder 58 vorgespannten Rastklinke 60 zusammenwirkt und in den je Schaltstellung ein Magnetelement 62 eingebettet ist (z. B. kann der Kunststoff Eisenoxidpulver enthalten und es können die entsprechenden Stellen örtlich dauermagnetisiert sein).

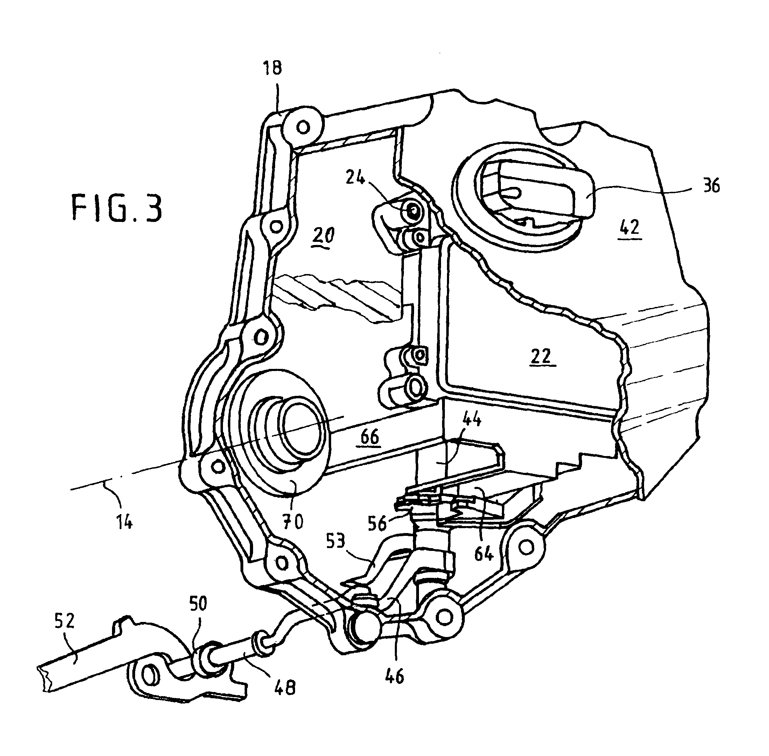

Die Magnetelemente 62 dienen zur berührungslosen Sensierung der Schaltstellungen der Schaltwelle 44 nach dem Halleffekt, wobei von der elektronischen Steuerung 22 ein entsprechend angeformter Hallsensor 64 (vgl. insbesondere Fig. 3) abragt.

Ferner erstrecken sich von der elektronischen Steuerung 22 an der hydraulischen Steuerung 20 vorbei in das Getriebegehäuse 16 einragende, armartige Drehzahlsensoren 66,68, die mit auf der An- und Abtriebswelle 12,14 befestigten Geberrädern 70,72 unmittelbar die Drehzahl dieser Wellen sensieren. Dies kann in bekannter Weise nach dem Induktions- oder Halleffekt-Verfahren erfolgen.

Die der hydraulischen Steuerung 20 zugewandte Anschlußwand 74 (Fig. 4) der elektronischen Steuerung 22 weist ferner in einem vertieften Bereich liegende Kühlrippen 76 auf und ist über nicht dargestellte Kanalöffnungen in der hydraulischen Steuerung 20 von dem Hydraulikfluid durchströmt bzw. gekühlt. An dieser Anschlußwand 74 kann dabei der Chip 43 bzw. der Temperatursensor innerhalb der elektronischen Steuerung 20 angeordnet sein. Ein ringförmiger Vorsprung 78 dient zum unmittelbaren Anschluß eines in die elektronische Steuerung 20 integrierten Drucksensors 80 an die angrenzende hydraulische Steuerung 20, wobei der einen Dichtring 82 tragende Vorsprung 78 in eine in den zu sensierenden Steuerkanal mündende Bohrung (nicht dargestellt) dicht einragt. Der Druck in diesem Steuerkanal kann somit unmittelbar über den Drucksensor 80 erfaßt und in der elektronischen Steuerung entsprechend verarbeitet werden. Obwohl nur ein Drucksensor 80 gezeigt ist, können auch mehrere Drucksensoren mehrere Steuerkanäle unmittelbar sensieren.

Desweiteren sind an der Anschlußwand 74 elektrische Steckanschlüsse 84,86 ausgebildet, über die die nicht dargestellten Magnetventile der hydraulischen Steuerung 20 direkt an die elektronische Steuerung 22 elektrisch anschließbar sind.

Zur genauen Fixierung der von der elektronischen Steuerung 22 abragenden Sensoren 64,66,68 relativ zu den Geberrädern 70,72 bzw. zu dem Stellungsgeber 56 sind an den Sensoren an deren freien Enden Stifte 88 angeformt, die in korrespondierende Bohrungen 90 im Getriebeflansch 18 einragen.

Der Anschluß der hydraulischen Steuerung 20 an das Getriebe wird einerseits zur Steuerung der Kegelscheiben bzw. des stufenlosen Übersetzungsverhältnisses über Kanäle bzw. Ringkanäle 92,94 (vgl. Fig. 1 anhand der Antriebswelle 12) in der An- bzw. Abtriebswelle 12,14 bewirkt, wobei von der hydraulischen Steuerung 22 abragende Rohrstutzen 96,98 unter Zwischenschaltung von dichtenden Kolbenringen 100 in diese Kanäle 92,94 eingesteckt sind; aufgrund der verwendeten Kolbenringe 100 ist eine Relativverdrehung der zu dichtenden Bauteile ermöglicht.

Andererseits sind zur hydraulischen Versorgung der Kupplungen und ggf. zum Anschluß einer Hydraulikpumpe frei im Getriebegehäuse 16 verlaufende Versorgungsleitungen 102, 104, 106 vorgesehen, die in im Getriebegehäuse 16 vorgesehenen Aufnahmen 108,110,112 eingesteckt sind und diese in Richtung zur hydraulischen Steuerung 20 überragen, wobei jeweils eine auf die Versorgungsleitungen 102,104,106 aufgesteckte, ringförmige Dichthülse 114 mit einer äußeren Spannhülse 113 und einem elastischen Dichtring 115 mit radial und axial ausgerichteten Dichtlippen eine Toleranzen sicher ausgleichende Abdichtung zwischen den Anschlußflächen der hydraulischen Steuerung 20 und den gehäusefesten Aufnahmen 108,110,112 bzw. den Versorgungsleitungen 102,104,106 sicherstellt.

Wie aus der Zeichnung ohne weiteres ersichtlich ist, sind alle Dicht- und Steckverbindungen parallel zur An- und Abtriebswelle 12,14 ausgerichtet, so daß durch einfaches Aufstecken des ggf. bereits vormontierten Steuerungsblockes aus hydraulischer Steuerung 20 und elektronischer Steuerung 22 und anschließendes Befestigen mittels der Schrauben 24 alle hydraulischen und elektrischen Anschlüsse und Verbindungen innerhalb des Getriebes hergestellt sind. Nach Montage des Anschlußdeckels 42 ist dann nur noch der fahrzeugseitige Zentralstecker mit dem korrespondierenden Zentralanschluß 36 zu verbinden.

Die Erfindung ist nicht auf das beschriebene Ausführungsbeispiel beschränkt. So kann beispielsweise anstelle eines CVT-Getriebes auch ein automatisches Stufengetriebe, z. B. ein Umlaufrädergetriebe, verwendet sein.

## Patentansprüche

1. Steuerungsanordnung an einem automatischen, elektrohydraulisch gesteuerten Getriebe (10), insbesondere für Kraftfahrzeuge, mit einer Antriebswelle (12), einer Abtriebswelle (14), Getriebemitteln zwischen den Wellen, die zur Ubersetzungsänderungsteuerung hydraulisch betätigt werden, wobei eine hydraulische Steuerungseinrichtung (20) mit elektrischen Magnetventilen das Hydraulikfluid zu den hydraulischen Betätigungsmitteln leitet und eine elektronische Steuerungseinrichtung (22) nach Maßgabe von Eingabeparametern und Drehzahlsensierung der Wellen (12,14) die Magnetventile ansteuert und wobei die hydraulische Steuerungseinrichtung (20) und die elektronische Steuerungseinrichtung (22) unmittelbar aneinander angebaut sind, wobei Steckverbindungen (84,86) zwischen den Magnetventilen der hydraulischen Steuerungseinrichtung (20) und der elektronischen Steuerung (22) vorgesehen sind, **dadurch gekennzeichnet, daß** an der elektronischen Steuerungseinrichtung (22) ein Sensor (64) vorgesehen ist, der unmittelbar mit einem Stellungsgeber (56) einer manuell betätigbaren, im Getriebegehäuse (16) drehbar gelagerten Schaltwelle (44) zur berührungslosen Schaltstellungssensierung zusammenwirkt und
daß das freie Ende (88) des Sensors (64) in einer getriebeseitigen Aufnahme (90) positioniert ist, und
daß an dem freien Ende des Sensors (64) ein Stift (88) angeformt ist, der in der als Bohrung (90) ausgebildeten Aufnahme eines Getriebegehäuseflansches (18) einschiebbar ist.

2. Steuerungsanordnung nach Anspruch 1, **dadurch gekennzeichnet, daß** der Stellungsgeber (56) mit Kunststoff umspritzt ist und je Schaltstellung ein Magnetelement (62) aufweist.

3. Steuerungsanordnung nach Ansprüchen 1 oder 2, **dadurch gekennzeichnet, daß** von der elektronischen Steuerungseinrichtung (22) zusätzliche Sensorarme (66,68) abragen, die an der hydraulischen Steuerungseinrichtung (20) vorbei wellenfeste Geberräder (70,72) der An- und Abtriebswelle (12,14) berührungslos sensieren und die ebenfalls in getriebegehäuseseitigen Aufnahmen (90) positioniert sind.

4. Steuerungsanordnung nach Anspruch 1, **dadurch gekennzeichnet, daß** an der hydraulischen Steuerungseinrichtung (20) zumindest ein offenliegender Steuerkanal vorgesehen ist, der von jeweils einem Drucksensor (80) der elektronischen Steuerungseinrichtung (22) unmittelbar abgedeckt ist.

5. Steuerungsanordnung nach einem oder mehreren der vorhergehenden Ansprüche, **dadurch gekennzeichnet, daß** an der elektronischen Steuerungseinrichtung (22) ein einziger Zentralanschluß (36) für den Anschluß des Getriebes an fahrzeugspezifische Steuerungsparameter, z.B. Motormanagement und Leistungsanforderung, vorgesehen ist, wobei die hydraulische und elektronische Steuerungseinrichtung (20,22) von einem Getriebegehäuse-Abschlußdeckel (42) umfaßt sind und ein Durchbruch (40) im Abschlußdeckel (42) den Zentralanschluß (36) dicht abschließt.

## Claims

1. Control arrangement on an automatic, electro-hydraulically controlled transmission (10), more particularly one for motor vehicles, having an input shaft (12), an output shaft (14), transmission means between the shafts, which are hydraulically operated for controlling changes in transmission ratios, a hydraulic control device (20) with electric solenoid valves conveying the hydraulic fluid to the hydraulic operating means and an electronic control device (22) energising the solenoid valves according to input parameters and sensing of-the speed of the shafts (12, 14), and the hydraulic control device (20) and the electronic control device (22) being mounted directly onto one another, there being provided plug-and-socket connections (84, 86) between the solenoid valves of the hydraulic control device (20) and the electronic controller (22), **characterised in that** provided on the electronic control device (22) is a sensor (64) which for the contactless sensing of shift positions cooperates directly with a position transducer (56) in respect of a manually operated gear shift lever shaft (44) mounted in the transmission case (16) in a manner allowing rotation and that the free end (88) of the sensor (64) is positioned in a locator (90) on the transmission side, and that formed on the free end of the sensor (64) is a pin (88) which is adapted to be inserted in the locator in the form of a bore (90) in a transmission case flange (18).

2. Control arrangement according to claim 1, **characterised in that** the position transducer (56) is sheathed in plastic and for each shift position has a solenoid element (62).

3. Control arrangement according to claims 1 or 2, **characterised in that** jutting from the electronic control device (22) and past the hydraulic control device (20) are additional sensor arms (66, 68) which, in a contactless manner, sense transducer wheels (70, 72) fixed on the input and output shafts (12, 14) and which are likewise positioned in locators (90) on the transmission case side.

4. Control arrangement according to claim 1, **characterised in that** provided on the hydraulic control device (20) is at least one open control duct which is directly covered by a respective pressure sensor (80) of the electronic control device (22).

5. Control arrangement according to one or more of the preceding claims, **characterised in that** provided on the electronic control device (22) is a single central terminal (36) for linking the transmission to vehicle-specific control parameters, e.g. engine management and power output requirement, the hydraulic and electronic control devices (20, 22) being covered by a transmission case terminal cover (42) and a passage (40) in the terminal cover (42) imperviously sealing off the central terminal (36).

## Revendications

1. Système de commande d'une transmission automatique à commande électrohydraulique (10), notamment pour véhicules automobiles, comportant un arbre d'entraînement (12), un arbre entraîné (14), des moyens de transmission entre les arbres, qui sont actionnés par voie hydraulique pour la commande du changement de rapport de transmission, et dans lequel un dispositif de commande hydraulique (20) comportant des soupapes électromagnétiques envoie le fluide hydraulique aux moyens hydrauliques d'actionnement, et un dispositif de commande électronique (22) commande les soupapes magnétiques en fonction de paramètres d'entrée et de la détection des vitesses de rotation des arbres (12, 14), et dans lequel le dispositif de commande hydraulique (20) et le dispositif de commande électronique (22) sont montés directement l'un contre l'autre, et dans lequel des connecteurs (84, 86) sont prévus entre les soupapes magnétiques et le dispositif de commande hydraulique (20) et le dispositif de commande électronique (22), **caractérisé en ce que** dans le dispositif de commande électronique (22) est prévu un capteur (64) qui coopère directement avec un transmetteur de position (56) d'un arbre de commutation (44), qui peut être actionné manuellement et est monté de manière à pouvoir tourner dans le carter (16) de la transmission, pour la détection sans contact de la position de commutation et **en ce que** l'extrémité libre (88) du capteur (64) est positionné dans un logement (90) situé du côté de la transmission, et **en ce qu'**à l'extrémité libre du capteur (64) est formée par moulage une tige (88), qui peut être insérée dans un logement, qui forme le perçage (90), d'une bride (18) du carter de la transmission.

2. Système de commande selon la revendication 1, **caractérisé en ce que** le capteur de position (56) est enrobé de matière plastique et comporte un élément formant aimant (62) pour chaque position de commutation.

3. Système de commande selon les revendications 1 ou 2, **caractérisé en ce que** sur le dispositif de commande électronique (22) font saillie des bras supplémentaires de capteurs (66, 68), qui détectent sans contact des roues de détection (70, 72), qui sont solidaires de l'arbre d'entraînement et de l'arbre mené (12, 14) et passent devant le dispositif de commande électronique (20) et qui sont positionnées également dans des logements (90) présents du côté du carter de la transmission.

4. Système de commande selon la revendication 1, **caractérisé en ce que** sur le dispositif de commande hydraulique (20) est prévu au moins un canal de commande ouvert, qui est recouvert directement par un capteur respectif de pression (80) du dispositif de commande électronique (22).

5. Système de commande selon une ou plusieurs des revendications précédentes, **caractérisé en ce que** sur le dispositif électronique de commande (22) est prévu un raccord central unique (36), pour relier la transmission à un paramètre de commande spécifique au véhicule, par exemple une gestion du couple et une demande de puissance, le dispositif hydraulique de commande et le dispositif électronique de commande (20, 21) étant entourés par un couvercle (42) de fermeture du carter de la transmission, et un passage (40) dans le couvercle de fermeture (42) fermant de manière étanche le raccord central (36).
